# EUROPEAN PATENT SPECIFICATION

(11) **EP 1 496 321 B1**
(45) Date of publication and mention of the grant of the patent: **20.05.2009**
(21) Application number: 03712943.4
(22) Date of filing: 25.03.2003
(51) Int. Cl.: F25B 1/00, F25B 41/00, F24F 5/00

(54) **REFRIGERATING EQUIPMENT**
KÜHLEINRICHTUNG
EQUIPEMENT DE REFRIGERATION

(30) Priority: 29.03.2002 JP 2002094183
(43) Date of publication of application: 12.01.2005
(73) Proprietor: DAIKIN INDUSTRIES, LTD., Osaka-shi, Osaka 530-8323 (JP)
(72) Inventor: TAKEGAMI, Masaaki, c/o Kanaoka Factory, Sakai-shi, Osaka 591-8511 (JP); TANIMOTO, Kenji, c/o Kanaoka Factory, Sakai-shi, Osaka 591-8511 (JP)
(74) Representative: HOFFMANN EITLE
(86) International application number: PCT/JP2003/003658
(87) International publication number: WO 2003/083380

(56) References cited:
- JP-A- 2 287 057
- JP-A- 3 129 255
- JP-A- 6 174 319
- JP-A- 6 229 634
- JP-A- 6 229 634
- JP-A- 8 054 148
- JP-A- 2000 346 467
- JP-A- 2001 280 717
- JP-A- 2001 280 719
- JP-A- 2001 349 622
- JP-U- 1 078 863
- JP-U- 62 141 158

## Description

### TECHNICAL FIELD

This invention relates to refrigerating apparatuses and more particularly to noise reduction techniques for reducing noise generated on the suction side of a compressor due to oil returning and gas injection operations.

### BACKGROUND ART

Refrigerating apparatuses which perform a vapor compression refrigerating cycle have been known in the prior art. Such a type of refrigerating apparatus is widely utilized as a cooling device for use in air conditioners which perform cooling and heating of the air in a room, refrigerators for cold storage of foods or the like, freezers, et cetera. In this refrigerating apparatus, refrigerant discharged out of a compressor flows through a condenser, an expansion mechanism, and an evaporator in that order, and a vapor compression refrigerating cycle is performed.

In such a refrigerant circuit, the refrigerant discharged out of the compressor contains refrigerating machine oil for lubrication of the inside of the compressor. In order to bring the refrigerating machine oil back to the compressor, an oil separator disposed on the discharge side of the compressor is connected, through an oil return passageway, to a suction pipe of the compressor (see for example Japanese Patent Application *Kokai* Publication No. 2001-280719 or JP-A-06 229 634). The oil return passageway is generally provided with a switching (opening/closing) valve. In this configuration, by placing the switching valve in the open position, refrigerating machine oil separated from the discharged gas refrigerant in the oil separator is brought back to the compressor through the oil return passageway and though the suction pipe. This makes it possible to prevent the compressor from suffering a lack of refrigerating machine oil.

### Problems To Be Solved

However, when the switching valve of the oil return passageway is opened, not only refrigerating machine oil but also gas refrigerant flows out of the oil separator. Consequently, the gas refrigerant, together with the refrigerating machine oil, passes through the oil return passageway and is injected into the suction pipe, and the gas refrigerants are mixed with each other in the inside of the suction pipe. And, when the gas refrigerant is injected into the suction pipe of the compressor, the flow of refrigerant is disturbed in the suction pipe, resulting in generation of abnormal noise which is transmitted to the outside from the suction pipe.

As just described above, in the conventional refrigerating apparatus, gas refrigerant is injected into the suction pipe where the gas refrigerants are mixed with each other. This arises a problem that abnormal noise is generated. This is the problem which arises not only when performing an oil returning operation but also when performing a gas injection operation for a different purpose because gas refrigerant is injected into the suction side of the compressor.

Bearing in mind the above-described problems, the present invention was made. Accordingly, an object of the present invention is to prevent the occurrence of abnormal noise in a refrigerating apparatus of the type in which gas refrigerants are injected into the suction side of the compressor.

### DISCLOSURE OF INVENTION

The present invention is an refrigerating apparatus as claimed in claim 1.

More specifically, an invention as set forth in Claim 1 is directed to a refrigerating apparatus in which a refrigerant circuit **(1E)** which performs a vapor compression refrigerating cycle is provided with an oil return passageway **(21)** through which refrigerating machine oil separated on the discharge side of compressors **(2A, 2B)** is injected into the suction side of the compressors **(2A, 2B)**. And, the refrigerating apparatus is characterized in that it is provided with a liquid injection passageway **(15)** through which liquid refrigerant is injected into the suction side of the compressors **(2A, 2B)** and is further characterized in that the oil return passageway **(21)** is connected to the liquid injection passageway **(15)**. Connecting the liquid injection passageway **(15)** to suction pipes of the compressors **(2A, 2B)** can first be considered as a means for "injecting liquid refrigerant into the suction side of the compressors **(2A, 2B)**" in the above-described arrangement; however, in some cases any other techniques may be employed (for example, the outlet of the liquid injection passageway **(15)** is connected directly to the domes of the compressors **(2A, 2B)**.

In the invention as set forth in Claim 1, refrigerating machine oil and gas refrigerant flowing in the oil return passageway **(21)** are injected, through the liquid injection passageway **(15)**, into the suction side of the compressors **(2A, 2B)**. Consequently, liquid droplets-containing refrigerant in the inside of the liquid injection passageway **(15)** is mixed with the gas refrigerant. Because of this, abnormal noise due to the intermixture of gas refrigerants will no longer occur. Even when there is such occurrence, the abnormal noise is absorbed in the liquid and is diminished. From the above, the leakage of noise to the outside on the suction side of the compressors is suppressed.

In addition, a refrigerating apparatus of an invention as set forth in Claim 2 according to Claim 1 is characterized in that a heat source side unit **(1A)** and utilization side units **(1B, 1C, 1D)** are provided which are connected with one another and is further characterized in that the degree of superheat of suction refrigerant of the compressors **(2A, 2B)** is controlled by adjusting the rate of flow of refrigerant flowing through the liquid injection passageway **(15)** without operating expansion mechanisms **(42, 52)** provided in the utilization side units **(1B, 1C, 1D).**

The refrigerating apparatus of the invention as set forth in Claim 2 is provided with the liquid injection passageway **(15)** for controlling the degree of superheat of suction refrigerant of the compressors **(2A, 2B)**. And, in this refrigerating apparatus, the liquid injection passageway **(15)** is used when performing for example an oil return operation, so that liquid refrigerant and gas refrigerant are mixed with each other and the mixture is injected into the compressors.

In addition, a refrigerating apparatus of an invention as set forth in Claim 3 according to Claim 2 is characterized in that the compressors (**2A, 2B**) are variable displacement compressors and is further characterized in that the liquid injection passageway **(15)** is opened whenever the operating capacity of the compressors **(2A, 2B)** exceeds a predetermined value. It may be arranged such that, when the operating capacity of the compressors **(2A, 2B)** falls below the predetermined value, the liquid injection passageway **(15)** is closed.

In the invention as set forth in Claim 3, the liquid injection passageway **(15)** is placed in the open state whenever the operating capacity of the compressors **(2A, 2B)** exceeds a predetermined value, and the degree of superheat of the suction refrigerant is controlled. And, although at this time gas refrigerant is injected into the liquid injection passageway **(15)** from the oil return passageway **(21)** or from the gas injection passageway **(37),** the occurrence of abnormal noise is suppressed, as described above. In addition, when the operating capacity of the compressors **(2A, 2B)** falls blow the predetermined value, gas refrigerant is injected (not through the liquid injection passageway **(15))** into the compressors **(2A, 2B)** from the oil return passageway **(21)** or from the gas injection passageway **(37)** if the liquid injection passageway **(15)** is closed. However, at this time the flow velocity of refrigerant is slow, and abnormal noise will hardly occur.

### Effects

In accordance with the invention as set forth in Claim 1, since the oil return passageway **(21)** is connected to the liquid injection passageway **(15),** this makes it possible to cause refrigerating machine oil and gas refrigerant flowing in the oil return passageway **(21)** to be injected, through the liquid injection passageway **(15),** into the suction side of the compressors **(2A, 2B).** By virtue of such arrangement, the occurrence of abnormal noise due to the intermixing of gas refrigerants is suppressed. Furthermore, an increase in the degree of superheat due to the injection of gas into the suction side of the compressors **(2A, 2B)** during the oil return operation is prevented.

Furthermore, in accordance with the invention as set forth in Claim 2, since the occurrence of abnormal noise is suppressed by making utilization of the liquid injection passageway **(15)** in the refrigerating apparatus which includes the liquid injection passageway **(15)** as its original part, this prevents the apparatus configuration from becoming complicated.

Finally, in accordance with the invention as set forth in Claim 3, the occurrence of abnormal noise is avoided effectively when there is the possibility that abnormal noise becomes a problem because the operating capacity of the compressors **(2A, 2B)** exceeds the predetermined value.

### BRIEF DESCRIPTION OF DRAWINGS

Figure **1** is a refrigerant circuit diagram of a refrigerating apparatus according to an embodiment of the present invention; and
Figure **2** is a flowchart representing control steps of the degree of valve opening of an expansion valve in a liquid injection passageway.

### BEST MODE FOR CARRYING OUT INVENTION

Hereinbelow, embodiments of the present invention will be described in detail with reference to the drawings.

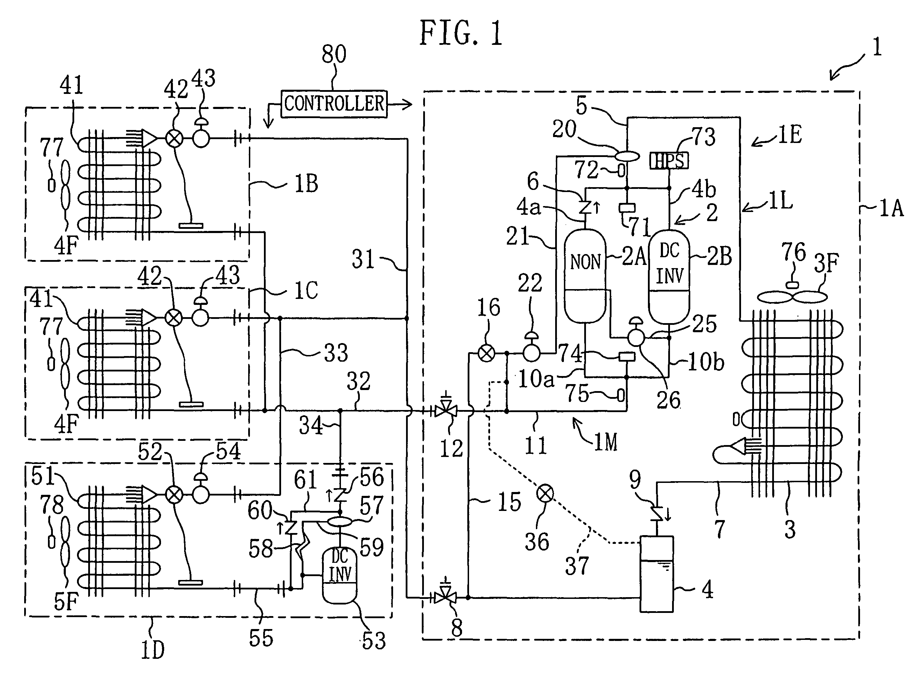

Referring to Figure **1**, there is shown a refrigerant circuit diagram of a refrigerating apparatus **(1)** according to an embodiment of the present invention. The refrigerating apparatus **(1)** is intended for installation in a convenience store or the like and is so constructed as to keep the inside of a plurality of showcases cold. In the example illustrated in Figure **1**, there is shown a refrigerating apparatus which is provided with two cold storage showcases and a single freeze storage showcase. However, any changes in the number of showcases may be made as required.

The refrigerating apparatus **(1)** has an outdoor unit **(1A),** cold storage units **(1B, 1C),** and a freeze storage unit **(1D).** The cold storage units **(1B, 1C)** installed in respective showcases for cold storage are so constructed as to cool the air in the cold storage showcases. On the other hand, the freeze storage unit **(1D)** installed in a showcase for freeze storage is so constructed as to cool the air in the freeze storage showcase. And, in the refrigerating apparatus **(1),** the units **(1A, 1B, 1C, 1D)** are connected to form a refrigerant circuit **(1E)** which performs a vapor compression refrigerating cycle.

### Outdoor Unit

The outdoor unit **(1A)** is provided with a compression mechanism **(2)** in which two compressors **(2A, 2B)** are connected in parallel. The outdoor unit **(1A)** further includes an outdoor heat exchanger **(3)** which is a heat exchanger on the heat source side, and a receiver **(4)**.

The compressors **(2A, 2B)** are for example high pressure dome scroll compressors of the hermetic sealed type. The compression mechanism **(2)** is made up of the non inverter compressor **(2A)** which is a first compressor and the inverter compressor **(2B)** which is a second compressor. The non inverter compressor **(2A)** is a fixed displacement compressor in which the motor rotates at a fixed rotational speed. On the other hand, the inverter compressor **(2B)** is a variable displacement compressor in which the motor is inverter-controlled so that its capacity is varied in stages or in succession.

A discharge pipe **(4a)** of the non inverter compressor **(2A)** and a discharge pipe **(4b)** of the inverter compressor **(2B)** are connected to a single high pressure gas pipe (discharge piping) **(5).** In addition, the discharge pipe **(4a)** of the non inverter compressor **(2A)** is provided with a check valve **(6)**.

The outdoor heat exchanger **(3)** is for example a fin and tube heat exchanger of the cross fin type, and an outdoor fan **(3F)** which is a heat source fan is disposed in the vicinity of the outdoor heat exchanger **(3)**. And, the high pressure gas pipe **(5)** is connected to a gas side end of the outdoor heat exchanger **(3)**.

One end of an outdoor liquid pipe **(7)** is connected to a liquid side end of the outdoor heat exchanger **(3)**. The receiver **(4)** is disposed midway in the outdoor liquid pipe **(7)**, and the other end of the outdoor liquid pipe **(7)** is connected, through a liquid stop valve **(8)**, to an interunit liquid pipe **(31)**. In addition, the outdoor liquid pipe **(7)** is provided, between the outdoor heat exchanger **(3)** and the receiver **(4)**, with a check valve **(9)** which permits the refrigerant to flow in the direction of the receiver **(4)** only.

Both a suction pipe **(10a)** of the non inverter compressor **(2A)** and a suction pipe **(10b)** of the inverter compressor **(2B)** are connected to one end of a low pressure gas pipe **(11)**. The other end of the low pressure gas pipe **(11)** is connected, through a gas stop valve **(12)**, to an interunit gas pipe **(32).**

In the above-described arrangement, the discharge pipes **(4a, 4b)** and the high pressure gas pipe **(5)** together make up a high pressure gas line **(1L).** On the other hand, the interunit gas pipe **(32),** the low pressure gas pipe **(11),** and the suction pipes **(10a, 10b)** of the compression mechanism **(2)** together make up a low pressure gas line **(1M).**

One end of a liquid injection passageway **(15)** is connected to a portion of the outdoor liquid pipe **(7)** situated between the receiver **(4)** and the liquid stop valve **(8)**. The other end of the liquid injection passageway **(15)** is connected to the low pressure gas pipe **(11),** being in communication with the suction pipes **(10a, 10b)** of the compressors **(2A, 2B).** The liquid injection passageway **(15)** is provided with an electric expansion valve **(16)** for controlling the rate of flow of refrigerant.

The high pressure gas pipe **(5)** is provided with an oil separator **(20)**. One end of an oil return passageway **(21)** is connected to the oil separator **(20)**. The oil return passageway **(21)** is provided with a solenoid valve **(22)** as a switching valve, and the other end of the oil return passageway **(21)** is connected to a portion of the liquid injection passageway **(15)** situated between the electric expansion valve **(16)** and the low pressure gas pipe **(11).** In other words, the oil return passageway **(21)** is connected to the suction pipes **(10a, 10b)** of the compressors **(2A, 2B)** not in direct manner but in indirect manner through the liquid injection passageway **(15).**

In addition, an oil level equalizing pipe **(25)** is connected between the dome (oil sump) of the non inverter compressor **(2A)** and the suction pipe **(10b)** of the inverter compressor **(2B).** The oil level equalizing pipe **(25)** is provided with a solenoid valve **(26).**

### Cold Storage Unit

The cold storage units **(1B, 1C)** are each provided with a respective cold storage heat exchanger **(41)** which is a utilization side heat exchanger and a respective cold storage expansion valve **(42)** which is an expansion mechanism. A liquid side of the cold storage heat exchanger **(41)** is connected, through the cold storage expansion valve **(42)** and a solenoid valve **(43)**, to the interunit liquid pipe (**31)**. On the other hand, a gas side of the cold storage heat exchanger **(41)** is connected to the interunit gas pipe **(32)**, being in communication with the suction side of the compression mechanism **(2)**.

In addition, the cold storage expansion valve **(42)** is a temperature sensitive expansion valve whose temperature sensing bulb is mounted on the gas side of the cold storage heat exchanger **(41)**. The cold storage heat exchanger **(41)** is implemented by for example a fin and tube heat exchanger of the cross fin type, and a cold storage fan **(4F)** which is a cooling fan is disposed in the vicinity of the cold storage heat exchanger **(41)**.

### Freeze Storage Unit

The freeze storage unit **(1D)** has a freezing heat exchanger **(51)** which is a utilization-side heat exchanger, a freezing expansion valve **(52)** which is an expansion mechanism, and a booster compressor **(53)** which is a freezing compressor. A branch liquid pipe **(33)** branched off from the interunit liquid pipe **(31)** is connected, via the solenoid valve **(54)** and the freezing expansion valve **(52)**, to a liquid side of the freezing heat exchanger **(51)**.

A gas side of the freezing heat exchanger **(51)** and a suction side of the booster compressor **(53)** are connected together by a connecting gas pipe **(55)**. A branch gas pipe **(34)** branched off from the interunit gas pipe **(32)** is connected to a discharge side of the booster compressor **(53)**. The branch gas pipe **(34)** is provided with a check valve **(56)** and an oil separator **(57)**. Connected between the oil separator **(57)** and the connecting gas pipe **(55)** is an oil return passageway **(59)** having a capillary tube **(58)**.

The booster compressor **(53)** performs two-stage compression of refrigerant together with the compression mechanism **(2)** of the outdoor unit **(1A)** so that the refrigerant evaporating temperature of the freezing heat exchanger **(51)** becomes lower than the refrigerant evaporating temperature of the cold storage heat exchanger **(41)**. The refrigerant evaporating temperature of the cold storage heat exchanger **(41)** is set to, for example, - 10 degrees Centigrade. On the other hand, the refrigerant evaporating temperature of the freezing heat exchanger **(51)** is set to, for example, - 40 degrees Centigrade.

In addition, the freezing expansion valve **(52)** is a temperature sensitive expansion valve whose temperature sensing bulb is mounted on the gas side of the freezing heat exchanger **(51)**. The freezing heat exchanger **(51)** is implemented by for example a fin and tube heat exchanger of the cross fin type, and a freezing fan **(5F)** which is a cooling fan is disposed in the vicinity of the freezing heat exchanger **(51)**.

In addition, a bypass pipe **(61)** having a check valve **(60)** is connected between the connecting gas pipe **(55)** which is the suction side of the booster compressor **(53)** and the branch gas pipe **(34)** which is the discharge side of the booster compressor **(53)**. The bypass pipe **(61)** is constructed such that, when the booster compressor **(53)** is stopped by failure or the like, refrigerant flows, bypassing the booster compressor **(53)**.

### Control System

Various sensors and switches are provided in the refrigerant circuit **(1E)**. The high pressure gas pipe **(5)** of the outdoor unit **(1A)** is provided with a pressure sensor **(71)** for high-level pressure which is a pressure detecting means for detecting the pressure of high pressure refrigerant and a discharge temperature sensor **(72)** which is a temperature detecting means for detecting the temperature of high pressure refrigerant. In addition, the discharge pipe **(4b)** of the inverter compressor **(2B)** is provided a pressure switch **(73)** which is placed in the opened position when the pressure of high pressure refrigerant becomes a predetermined value.

The low pressure gas pipe **(11)** is provided with a pressure sensor **(74)** for low-level pressure which is a pressure detecting means for detecting the pressure of low pressure refrigerant and a suction temperature sensor **(75)** which is a temperature detecting means for detecting the temperature of low pressure refrigerant. In addition, the outdoor unit **(1A)** is provided with an outside air temperature sensor **(76)** which is a temperature detecting means for detecting the temperature of outside air.

The cold storage units **(1B, 1C)** are each provided with a cold storage temperature sensor **(77)** which is a temperature detecting means for detecting the inside temperature of the associated cold storage showcase. On the other hand, the freeze storage unit **(1D)** is provided with a freezing temperature sensor **(78)** which is a temperature detecting means for detecting the inside temperature of the freeze storage showcase.

Output signals from the above-mentioned various sensors and switches are fed to a controller **(80)**. And, the controller **(80)** controls the operating capacity of the compression mechanism **(2)** according to the refrigerating capacities required for the cold storage heat exchanger **(41)** and the freezing heat exchanger **(51)**. In addition, the controller **(80)** is so configured as to control the degree of superheat of the suction refrigerant by adjusting the valve opening of the electric expansion valve **(16)** of the liquid injection passageway **(15)**.

### Running Operation

Hereinbelow, the running operation of the refrigerating apparatus **(1)** will be described.

In the first place, the activation and shutdown of the non inverter compressor **(2A)** and the activation, capacity control, and shutdown of the inverter compressor **(2B)** in the compression mechanism **(2)** are controlled by the operation of the controller **(80)** so that refrigerating capacities required in the cold storage heat exchanger **(41)** and the freezing heat exchanger **(51)** are obtained. During the cooling operation by the freezing heat exchanger **(51)**, the booster compressor **(53)** is activated and its capacity is also controlled. In addition, during the cold storage operation of the cold storage units **(1B, 1C)** and the freeze storage operation of the freeze storage unit **(1D)** (i.e., during the thermo-on operation), the solenoid valves **(43)** of the cold storage units **(1B, 1C)** and the solenoid valve **(54)** of the freeze storage unit **(1D)** are opened. On the other hand, during the shutdown operation which stops cooling operations (during the thermo-off operation) the solenoid valves **(43, 54)** are closed.

Furthermore, the expansion valve of the liquid injection passageway **(15)** is placed normally in the "open" state and its valve opening is controlled. In other words, in the present embodiment the degree of superheat of the suction refrigerant is controlled by execution of a liquid injection operation because the expansion valves **(42, 52)** of the temperature sensitive type are employed in the cold and freeze storage units **(1B, 1C, 1D).**

In the above-described setting, refrigerant discharged out of the non inverter compressor **(2A)** and refrigerant discharged out of the inverter compressor **(2B)** flow together in the high pressure gas pipe **(5)**, flow into the outdoor heat exchanger **(3)**, and condense to a liquid refrigerant. The liquid refrigerant passes through the outdoor liquid pipe **(7)** and through the receiver **(4)** and then flows to the interunit liquid pipe **(31)**.

The liquid refrigerant flowing through the interunit liquid pipe **(31)** expands in the cold storage expansion valve **(42)** on the side of the cold storage units **(1B, 1C)** and thereafter flows through the cold storage heat exchanger **(41)** where it changes into vapor. Meanwhile, a part of the liquid refrigerant flowing through the interunit liquid pipe **(31)** branches off into the branch liquid pipe **(33)**, flows into the freeze storage unit **(1D),** expands in the freezing expansion valve **(52)**, and thereafter flows through the freezing heat exchanger **(51)** where it changes into vapor. The gas refrigerant evaporated in the freezing heat exchanger **(51**) is drawn into the booster compressor **(53)** and is discharged into the branch gas pipe **(34)**.

The gas refrigerant evaporated in the cold storage heat exchanger **(41)** and the gas refrigerant discharged out of the booster compressor **(53)** join and flow together in the interunit gas pipe **(32),** return to the outdoor unit **(1A),** flow through the low pressure gas pipe **(11)**, and are brought back to the non inverter compressor **(2A)** and to the inverter compressor **(2B)**.

As a result of the repetition of such refrigerant circulation, the inside of the cold storage and freeze storage showcases is cooled. When the inside of each showcase is kept sufficiently cool, the solenoid valves **(43)** of the cold storage units **(1B, 1C)** and the solenoid valve **(54)** of the freeze storage unit **(1D)** are closed individually. Consequently, the refrigerating apparatus enters the resting operation state (thermo-off operation state) in which no refrigerant circulates in the heat exchangers **(41, 51)** and only an operation of supplying air is carried out.

In the compression mechanism **(2)**, it is constructed such that only the inverter compressor **(2B)** is controlled in capacity until a certain operating capacity, with the non inverter compressor **(2A)** placed in the stopped state, and when operating capacities more than it is required, both the compressors **(2A, 2B)** are activated at the same time and the capacity of the inverter compressor **(2B)** is controlled. In addition, in some cases the inverter compressor **(2B)** is stopped and only the non inverter compressor **(2A)** is activated.

In the refrigerating apparatus **(1)**, the utilization side is a cold storage/freeze storage side, and the level of low pressure is lower in comparison with that of air conditioning apparatuses. Because of this, there is a region that requires an increase in the operating capacity of the compression mechanism **(2)** although the flow velocity of suction refrigerant is slow. In such a case, the degree of superheat of refrigerant of the compression mechanism **(2)** tends to increase. Besides, both the expansion mechanism **(42)** of each of the cold storage units **(1B, 1C)** and the expansion mechanism **(52)** of the freeze storage unit **(1D)** are expansion valves of the temperature sensitive type, as described above. Accordingly, the valve opening of these expansion mechanisms cannot be adjusted from the side of the outdoor unit **(1A).** To cope with this, in the present embodiment, a liquid injection operation is carried out in order to prevent the degree of superheat of refrigerant of the compression mechanism **(2)** from excessively increasing.

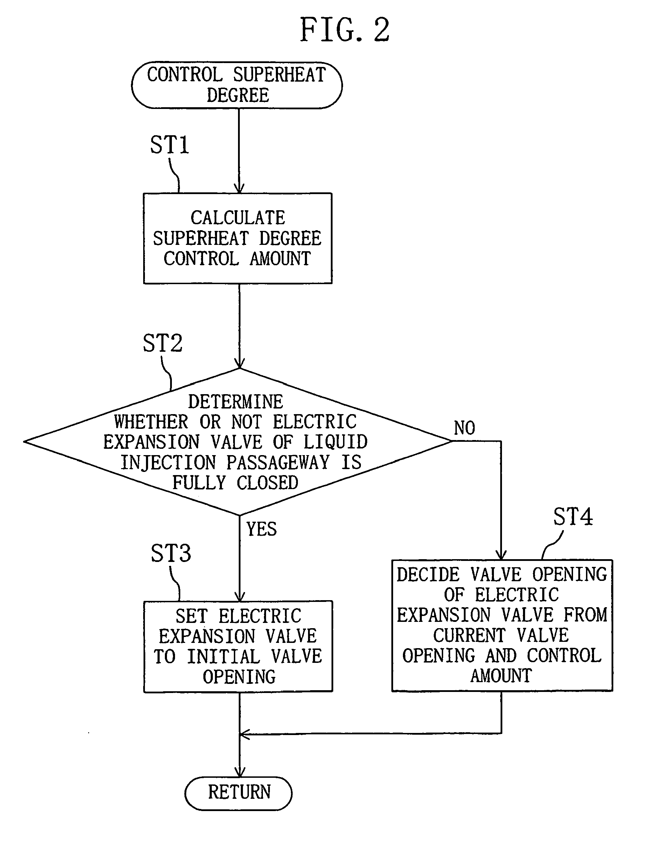

The electric expansion valve **(16)** of the liquid injection passageway **(15)** is placed constantly in the open state in normal conditions although it may be closed exceptionally when the compression mechanism **(2)** is operated in low capacity regions. Control of the valve opening of the electric expansion valve **(16)** during the normal operations is carried out according to steps of a flowchart shown in Figure **2****.**

In Step ST1 of the flowchart, the valve-opening control amount of the electric expansion valve **(16)** is calculated based on the degree of superheat of refrigerants on the suction side and on the discharge side of the compression mechanism **(2)**. In Step ST2, it is determined whether the electric expansion valve **(16)** is fully closed or not. The time when the electric expansion valve **(16)** is placed in the fully closed state during the normal operations is for example a time when the refrigerating apparatus is activated. At this time, in Step ST3 an operation of forcing the electric expansion valve **(16)** to open slightly is performed and the valve opening is set to the initial value. In addition, if in Step ST2 it is decided that the electric expansion valve **(16)** is already placed in the open state, then the valve-opening control procedure proceeds to Step ST4. In Step ST4, based on the valve-opening control amount found in Step ST1 and on the current valve opening, the electric expansion valve **(16)** is adjusted in valve opening. As a result of such arrangement, while constantly injecting a small amount of liquid refrigerant into the suction pipes **(10a, 10b),** its flow rate adjustment is made, thereby controlling the degree of superheat of refrigerant of the compression mechanism **(2)**.

In the present embodiment the high pressure gas pipe **(5)** on the discharge side of the compression mechanism **(2)** is provided with the oil separator **(20)**, as described above. And, the oil return passageway **(21)** extending from the oil separator **(20)** is connected to the liquid injection passageway **(15)**. The solenoid valve **(22)** of the oil return passageway **(21)** is controlled such that it turns on and off intermittently at a predetermined timing interval, and when placed in the ON state an operation of returning oil to the compression mechanism **(2)** is carried out.

To sum up, refrigerating machine oil contained in refrigerant discharged out of the compression mechanism **(2)** is separated from the refrigerant in the oil separator **(20)**. When the solenoid valve **(22)** is placed in the open state, the refrigerating machine oil passes through the oil return passageway **(21),** the liquid injection passageway **(15),** the low pressure gas pipe **(11),** and the suction pipes **(10a, 10b),** and is drawn into the compression mechanism **(2).** At the time when both of the two compressors **(2A, 2B)** are being operated, generally the non inverter compressor **(2A)** is greater in capacity than the inverter compressor **(2B)**, and the refrigerating machine oil is recovered mainly into the non inverter compressor **(2A)**. In addition, when refrigerating machine oil is stored excessively in the non inverter compressor **(2A)**, the refrigerating machine oil is recovered into the inverter compressor **(2B)** when the solenoid valve **(26)** of the oil level equalizing pipe **(25)** is placed in the open state.

In the present embodiment, when the solenoid valve **(22)** of the oil return passageway **(21)** is opened, gas refrigerant flows through the oil return passageway **(21)**, together with refrigerating machine oil, and the same operation as gas injection is carried out. At this time, the refrigerating machine oil and the gas refrigerant flow first into the liquid injection passageway **(15)**. Consequently, in the liquid injection passageway **(15)**, gas refrigerant is mixed into refrigerant containing therein liquid droplets. Therefore, abnormal noise due to the intermixing of gas refrigerants is hardly generated. Even when generated, such abnormal noise is absorbed into the liquid since the refrigerant flowing through the liquid injection passageway **(15)** contains therein liquid. As stated above, the leakage of abnormal noise to the outside on the suction side of the compression mechanism **(2)** is suppressed.

### Effects of Embodiment

As has been described above, in accordance with the present embodiment, it is possible to suppress the occurrence of abnormal noise on the suction side of the compression mechanism **(2)** during the oil return operation.

In addition, it is contemplated that the degree of superheat of the refrigerant increases in the compressors **(2A, 2B)** if gas refrigerant on the discharge side is injected directly to the suction side of the compressors **(2A, 2B)** by an oil return operation; however, it is possible to prevent the degree of superheat from increasing excessively if the oil return passageway **(21)** is made to join the liquid injection passageway **(15)**.

In addition, it is impossible to adjust the valve opening of the expansion valves **(42, 52)** of the showcases from the side of the outdoor unit **(1A)** because these valves are of the temperature sensitive type, in view of which the refrigerating apparatus **(1)** is provided, as its original part, with the liquid injection passageway **(15)** for controlling the degree of suction superheat. Accordingly, even when it is arranged such that the oil return passageway **(21)** is connected to the liquid injection passageway **(15)**, this will not make the structure complicated.

Furthermore, even when the occurrence of abnormal noise due to the oil return operation is likely to take place because the operating capacity of the compression mechanism **(2)** exceeds a predetermined value, such an occurrence is avoided effectively.

### Other Embodiments

In the above-described embodiment, the description has been made in terms of an example in which the oil return passageway **(21)** is connected to the liquid injection passageway **(15)**. However, the present invention is, in essentials, to suppress the occurrence of abnormal noise by injecting gas refrigerant to refrigerant in the liquid injection passageway **(15)** without the intermixing of gas refrigerants on the suction side of the compression mechanism **(2)**.

Because of this, the present invention is applicable not only to refrigerating apparatuses provided with an oil return passageway but also to refrigerating apparatuses provided with a gas injection passageway for injecting gas refrigerant into a compressor. For example, for the case of the circuit configuration of the above-described embodiment, it may be arranged such that a gas injection passageway **(37)**, provided with a flow rate adjusting valve **(36)** and extending from an upper end portion of the receiver **(4)**, is connected to the liquid injection passageway **(15)**, as indicated by broken line of Figure **1****.** When the inside of the receiver **(4)** is filled with gas refrigerant, the internal pressure of the receiver **(4)** becomes high, therefore making it difficult for liquid refrigerant to flow into the receiver **(4)** from the outdoor heat exchanger **(3)**. In such a case, the gas injection passageway **(37)** can be used as a gas-vent passageway. As a result of such arrangement, gas refrigerant withdrawn from the receiver **(4)** is injected into the liquid injection passageway **(15)**, thereby suppressing the occurrence of abnormal noise at the injection portion. In the conventional apparatus in which a gas injection passageway is connected directly to a suction pipe of a compressor, abnormal noise is produced because gas refrigerants are mixed with each other in the inside of the suction pipe. On the other hand, it is possible to prevent the occurrence of abnormal noise by the same actions as the above-described embodiment, when the gas injection passageway is connected to the liquid injection passageway.

### INDUSTRIAL APPLICABILITY

As has been described above, the present invention is useful for refrigerating apparatuses.

## Claims

1. A refrigerating apparatus in which a refrigerant circuit (1E) which performs a vapor compression refrigerating cycle is provided with an oil return passageway (21) through which refrigerating machine oil separated at the discharge side of a compression mechanism (2) in which two compressors (2A, 2B) are connected in parallel is injected into the suction side of said compressors (2A, 2B), wherein
the refrigerating apparatus comprises a liquid injection passageway (15) through which liquid refrigerant is injected into the suction side of said compressors (2A, 2B),
said liquid injection passageway (15) is connected to a low pressure gas pipe (11) being in communication with suction pipes (10a, 10b) of the compressors (2A, 2B), and
said oil return passageway (21) is connected to said liquid injection passageway (15).

2. The refrigerating apparatus of claim 1 comprising:
a heat source side unit (1A) and utilization side units (1B, 1C, 1D), said units (1A, 1B, 1C, 1D) being connected with one another,
wherein the degree of superheat of suction refrigerant of said compressors (2A, 2B) is controlled by adjusting the rate of flow of refrigerant flowing through said liquid injection passageway (15) without operating expansion mechanisms (42, 52) provided in said utilization side units (1B, 1C, 1D).

3. The refrigerating apparatus of claim 2,
wherein said compressors (2A, 2B) are variable displacement compressors,
wherein said liquid injection passageway (15) is opened whenever the operating capacity of said compressors (2A, 2B) exceeds a predetermined value.

## Patentansprüche

1. Kühlgerät, bei dem ein einen Dampfkompressionkühlzyklus ausführender Kühlkreis (1E) mit einem Ölrückführungsdurchgang (21) versehen ist, durch den ein an der Ausstossseite des Kompressionsmechanismus (2), bei dem zwei Kompressoren (2A, 2B) parallel verbunden sind, getrenntes Kühlmaschinenöl in die Ansaugseite der Kompressoren (2A, 2B) eingespritzt wird, bei dem
das Kühlgerät einen Flüssigkeitseinspritzdurchgang (15) umfasst, durch den ein Flüssigkeitskühlmittel in die Ansaugseite der Kompressoren (2A, 2B) eingespritzt wird,
der Flüssigkeitseinspritzdurchgang (15) mit einem sich mit Ansaugrohren (10a, 10b) der Kompressoren (2A, 2B) in Kommunikation befindlichen Niederdruck-Gasrohr (11) verbunden ist, und
der Ölrückführungsdurchgang (21) mit dem Flüssigkeitseinspritzdurchgang (15) verbunden ist.

2. Kühlgerät gemäß Anspruch 1, umfassend:
eine wärmequellenseitige Einheit (1A) und verwenderseitige Einheiten (1B, 1C, 1D), wobei die Einheiten (1A, 1B, 1C, 1D) miteinander verbunden sind,
wobei der Ansaugkühlmittel-Überhitzungswärmegrad der Kompressoren (2A, 2B) gesteuert wird, indem der Durchsatz des durch den Flüssigkeitseinspritzdurchgang (15) strömenden Kühlmittels ohne Betrieb eines in den verwenderseitigen Einheiten (1B, 1C, 1D) vorgesehenen Expansionsmechanismus (42, 52) eingestellt wird.

3. Kühlgerät gemäß Anspruch 2,
bei dem die Kompressoren (2A, 2B) variable Verdrängungskompressoren sind,
bei dem der Flüssigkeitseinspritzdurchgang (15) geöffnet wird, wann immer die Betriebskapazität der Kompressoren (2A, 2B) einen vorbestimmten Wert übersteigt.

## Revendications

1. Appareil de réfrigération dans lequel un circuit réfrigérant (1E) qui exécute un cycle de réfrigération par compression de vapeur est doté d'un passage (21) de retour d'huile à travers lequel de l'huile de machine de réfrigération séparée côté refoulement d'un mécanisme de compression (2) où deux compresseurs (2A, 2B) sont reliés en parallèle, est injectée côté aspiration desdits compresseurs (2A, 2B), où
l'appareil de réfrigération comprend un passage (15) d'injection de liquide à travers lequel un réfrigérant liquide est injecté côté aspiration desdits compresseurs (2A, 2B),
ledit passage (15) d'injection de liquide est relié à un tuyau de gaz (11) basse pression qui est en communication avec des tuyaux d'aspiration (10a, 10b) des compresseurs (2A, 2B), et
ledit passage (21) de retour d'huile est relié audit passage (15) d'injection de liquide.

2. Appareil de réfrigération de la revendication 1 comprenant:
une unité côté source thermique (1A) et des unités côté utilisation (1B, 1C, 1D), lesdites unités (1A, 1B, 1C, 1D) étant reliées les unes aux autres,
où le degré de surchauffe du réfrigérant côté aspiration desdits compresseurs (2A, 2B) est régulé en ajustant le débit du réfrigérant qui s'écoule à travers ledit passage (15) d'injection de liquide sans faire fonctionner des mécanismes d'expansion (42, 52) pourvus dans lesdites unités côté utilisation (1B, 1C, 1D).

3. Appareil de réfrigération de la revendication 2,
où lesdits compresseurs (2A, 2B) sont des compresseurs à déplacement variable,
où ledit passage (15) d'injection de liquide s'ouvre à chaque fois que la capacité de fonctionnement desdits compresseurs (2A, 2B) dépasse une valeur prédéterminée.
